# EUROPEAN PATENT SPECIFICATION

(11) **EP 2 637 279 B1**
(45) Date of publication and mention of the grant of the patent: **12.07.2017**
(21) Application number: 12007538.7
(22) Date of filing: 06.11.2012
(51) Int. Cl.: H02J 3/38

(54) **Modular energy portal with AC architecture for harvesting energy from electrical power sources**
Modulares Energieportal mit Wechselstromarchitektur zur Energiegewinnung aus elektrischen Stromquellen
Portail d'énergie modulaire à architecture de CA pour collecter l'énergie provenant de sources d'énergie électrique

(30) Priority: 07.03.2012 US 201213414349
(43) Date of publication of application: 11.09.2013
(73) Proprietor: KOHLER CO., Kohler, WI 53044 (US)
(72) Inventor: Dierksheide, Nicole, Sheboygan Falls, WI 53085 (US); Siira, Mark E., Cedarburg, WI 53012 (US); White, Timothy W., Kohler, WI 53044 (US); Austin, Thomas M., Neenah, WI 54956 (US); Panzer, Mark L., Appleton, WI 54911 (US); Schmitt, Michael J., Larsen, WI 54947 (US); Thompson, Ryan J., Neenah, WI 54956 (US)
(74) Representative: Hoefer & Partner Patentanwälte mbB

(56) References cited:
- EP-A1- 2 219 276
- US-A1- 2010 253 151
- US-A1- 2011 057 512
- US-A1- 2011 115 301
- US-A1- 2011 140 535
- US-A1- 2011 232 714
- US-B1- 6 311 137

## Description

### BACKGROUND

The present invention relates to energy harvesting from multiple power sources.

Conventionally, electrical power is generated at a utility company and transmitted over a power grid to homes, factories, and other facilities. These facilities pay the electrical utility for the amount of electrical power that they consume. Electrical power distribution systems having this type of configuration have existed for many decades.

### SUMMARY

Although centralized electrical power generation and distribution systems have functioned well, more recently there is a desire to produce energy locally at homes and factories. Various issues arise when attempting to interface locally produced energy with power provided from a utility company over a grid. Specific complications are presented when energy is generated by solar panels and when power is generated by multiple local power sources, such as solar panels and internal combustion engine generators. Embodiments of the invention are directed to an energy harvesting system and method for use with local power sources, particularly solar panels. Since such power sources are not centralized, they can also be referred to as distributed power sources.

Power generation and distribution systems are known from the US2011/0232714A1, US2011/0115301A1, US2010/025351A1 and EP2219276A1. These Power generation and distribution systems have in common that they comprise inverters for supplying an AC-Bus and that they allow a disconnection of the AC-Bus from a power grid.

An energy harvesting system of the invention may include a modular energy harvesting portal comprising a housing with a bay, a plurality of inverters, a controller, and an AC bus. The plurality of inverters including a first inverter and a second inverter. The first inverter has a first DC input, a first AC output, and a first power rating. The first inverter converts DC power received at the first DC input to AC power and outputs AC power at the first AC output. The second inverter has a second DC input, a second AC output, and a second power rating. The second inverter converts DC power received at the second DC input to AC power and outputs AC power at the second AC output. The plurality of inverters are positioned in the bay. The controller is configured to communicate with each of the plurality of inverters. The AC bus connects the first AC output and the second AC output. The controller selectively controls a switch to couple the AC bus to one of an AC grid and a local load. The modular energy harvesting portal system has a power rating dependent on the number of inverters in the portal and the power rating of each of the inverters of the plurality of inverters.

A method of harvesting energy using a modular energy harvesting portal in accordance with the invention may include receiving a first type of power from a first power source, converting the first type of power to AC power using a first inverter, and providing the first inverted AC power to an AC bus. The method also includes receiving a second type of power from a second power source, converting the second type of power to AC power using a second inverter, and providing the second inverted AC power to the AC bus. The method further comprises outputting the AC power from the AC bus to grid connection switches controlled by a controller and controlling the grid connection switches to connect the AC power from the AC bus to one of an AC grid and a local load.

Other aspects of the invention will become apparent by consideration of the detailed description and accompanying drawings.

### BRIEF DESCRIPTION OF THE DRAWINGS

Fig. 1 depicts a system architecture known to exist prior to the existence of embodiments of the present invention.
Fig. 2a depicts an energy harvesting system according to one embodiment of the invention.
Fig. 2b depicts an energy harvesting system according to another embodiment of the invention.
Fig. 3 is an end view of an energy portal (having three inverters) of the energy harvesting system.
Fig. 4 illustrates one inverter of the energy portal of the energy harvesting system.
Fig. 5a is a perspective view of the energy portal where a lid or cover of the portal housing has been removed and the inverters are stacked in a horizontal configuration.
Fig. 5b is a perspective view of the energy portal where a lid or cover of the portal has been removed and the inverters are stacked in a vertical configuration.
Fig. 6 is a perspective view of the housing of the energy portal and illustrates air flow through the housing.
Fig. 7 is a flowchart depicting the method of harvesting energy using the energy harvesting system.
Fig. 8 is a flowchart depicting the method of replacing an inverter with a new inverter.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways.

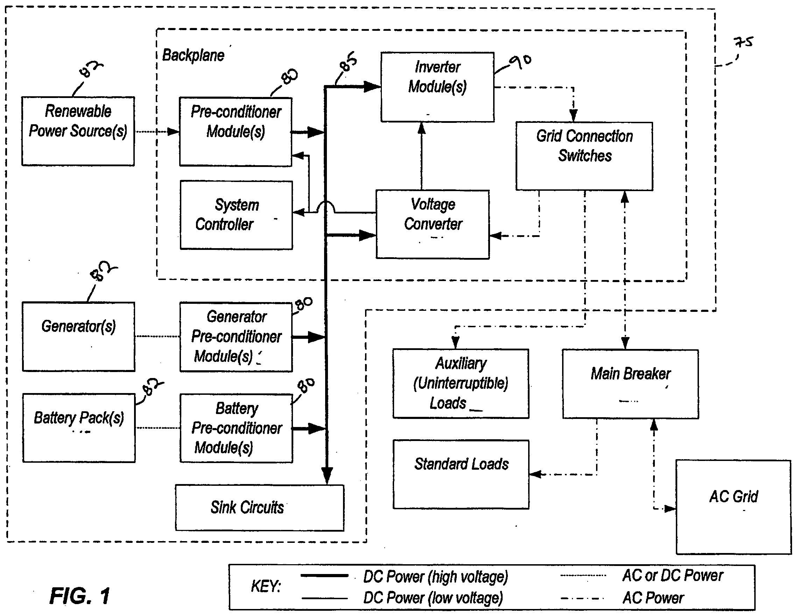

Fig. 1 depicts an energy harvesting system 75 having a DC power bus configuration or architecture. The energy harvesting system of Fig. 1 is the subject of U.S. Patent Application No. 12/953,985, which is commonly owned with the present application. The system 75 includes separate preconditioner modules 80, one for each power source 82, and a shared DC bus 85. One or more inverters 90 are coupled to the shared DC bus 85 to receive the combined DC output from the various preconditioners 80. The inverters 90 invert the received DC power to AC power, which is output to various local loads and an AC utility grid. While the DC-bus configuration has certain advantages, the system 75 is, at least compared to some AC-bus configurations, more costly and complex due in part to the use of separate preconditioner modules 80 (one for each power source 82). In some distributed power system scenarios, the advantages of the DC architecture may not merit the increased costs and complexity. Additionally, in some instances, a DC architecture has reduced efficiency relative to the AC architectures described herein.

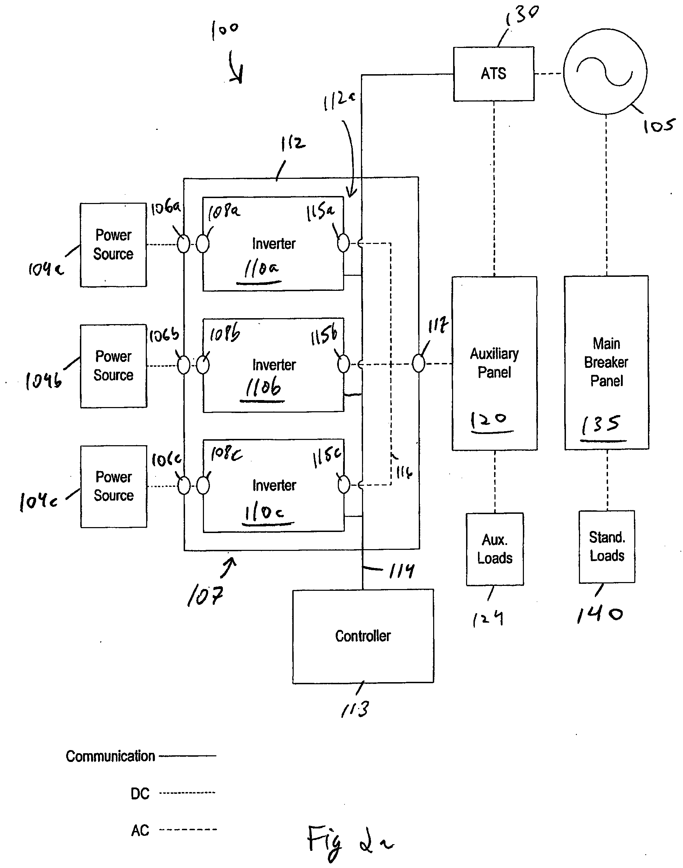

Fig. 2a depicts an energy harvesting system 100 with an AC bus configuration. The energy harvesting system 100 converts DC power from power sources 104 to AC power, which is provided to an AC grid (grid) 105, used by local loads, or both. In some instances, a utility company provides compensation for the power received at the grid 105 from the energy harvesting system 100. The power sources 104 for the energy harvesting system 100 include power sources 104a, 104b, and 104c, which may be renewable or nonrenewable. A renewable power source 104 can be photovoltaic cells, photovoltaic arrays, a wind generator, or other types of renewable power sources. Some embodiments receive DC power from renewable power sources 104 whose outputs may vary with environmental conditions. For example, the output of solar cells varies with the amount of solar radiation to which the cells are exposed. The output of wind generators or turbines varies with the amount of wind to which the turbines are exposed. The DC output of each renewable power source 104a, 104b, and 104c (referred to collectively as renewable power sources 104) is coupled to power source inputs (DC inputs) 106a, 106b, and 106c (referred to collectively as DC inputs 106) of a modular energy harvesting portal (energy portal) 107. The DC inputs 106 receive the DC power signal (DC power) from the renewable power sources 104. The DC power is then sent to the DC inputs 108a, 108b, and 108c of the inverters 110a, 110b, and 110c (referred to collectively as inverters 110). The inverters 110 are located within a bay 112a of a housing 112 of the energy portal 107. The inverter 110a, 110b, and 110c are controlled by a controller 113 via a communication bus 114.

The inverters 110 invert the DC power from the renewable power sources 104 to AC power. An AC output 115a, 115b, and 115c of each inverter 110a, 110b, and 110c is coupled to an AC bus 116. AC power output by the inverters 110 is transmitted along the AC bus 116 to an AC output 117. The AC output 117 of the energy portal 107 is connected to auxiliary panel 120. The auxiliary panel 120 is similar to a conventional circuit breaker panel used in a home or factory that couples an AC power source (e.g., grid 105 and/or energy portal 107) to local loads (e.g., auxiliary load 124). Additionally, the auxiliary panel 120 provides a connection that enables AC power output by the energy portal 107 to be fed into the grid 105 (via an automatic transfer switch ("ATS") 130). The controller 113, via the communications bus 114, is connected to and communicates with the ATS 130. The ATS 130 couples the AC bus 116 to the AC grid 105. Although referred to as "auxiliary," the loads on the auxiliary circuits provided by the auxiliary panel 120 are often loads for which it is important to provide an uninterrupted supply of power. For example, furnaces, hot water heaters, refrigerators, security systems, and fire alarm and suppression systems may be connected to the auxiliary panel 120 so that power from the energy portal 107 is provided to the auxiliary loads 124 in the event that power from the grid 105 is lost (for example, due to grid failure).

The grid 105 is an AC power grid with a system of transmission lines and other devices by which electrical power generated by an electric utility company is transmitted to customers. The grid 105 is coupled to a main breaker panel 135. The main breaker panel 135 is a delivery point of the power from the grid 105 to other local loads (e.g., standard loads 140) of a customer. The main breaker panel 135 is a conventional circuit breaker unit that is coupled to the grid 105. The main breaker panel 135 is operable to break the connection between the grid 105 and the standard loads 140 when current passing through the main breaker panel 135 exceeds a predetermined threshold. For instance, if the standard loads 140 draw excessive current, the main breaker panel 135 breaks the connection between the standard loads 140 and the grid 105. The auxiliary panel 120 performs a similar protection function for the auxiliary loads 124 as the main breaker panel 135 does for the standard loads 140.

In operation, the energy harvesting system 100 is either grid-tied or off-grid, depending on the particular situation. When the grid 105 is operating normally, the energy harvesting system 100 is generally grid-tied. When grid-tied, the energy harvesting system 100 provides power from the energy portal 107 to the grid 105 and it is intended that such power be purchased by the local electric utility company from the power producer. In the grid-tied mode, AC power from the grid 105, which includes AC power from the energy portal 107, powers the auxiliary loads 124 as well as the standard loads 140. When the grid 105 is operating abnormally (e.g., during a black out or brown out), the ATS 130 disconnects the normal circuit connected to the grid 105 and switches to an emergency position, thus disconnecting the energy harvesting system 100 from the grid 105. In the off-grid mode, the energy portal 107, but not the grid 105, provides power to the auxiliary loads 124 through the auxiliary panel 120. Also in the off-grid mode, the standard loads 140 are not powered.

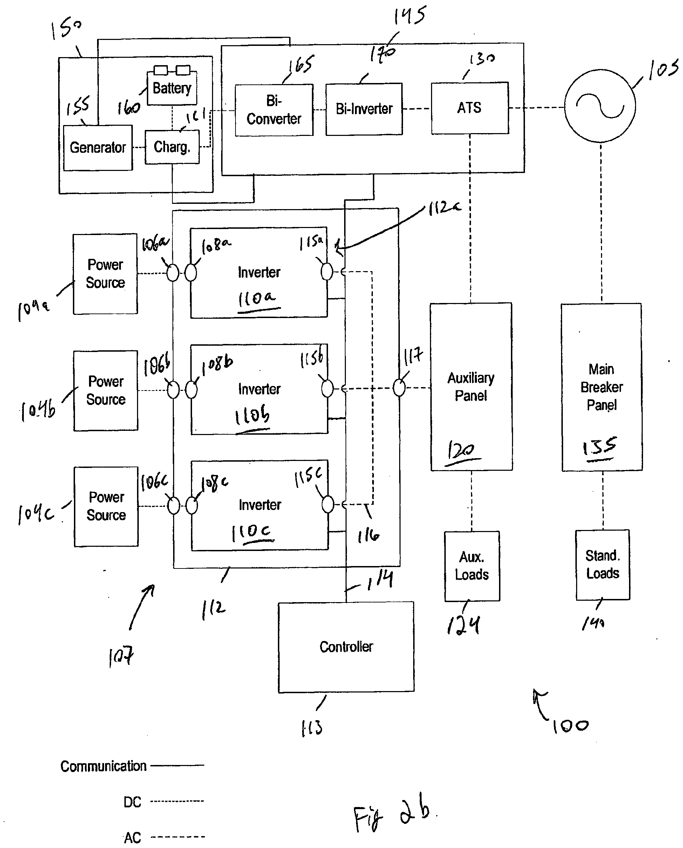

Fig. 2b depicts another embodiment of the energy harvesting system 100, which includes a standby power sub-system 145. The standby power sub-system 145 includes a standby power source 150 that can include a generator 155, a battery (or battery pack) 160, a battery charging circuit 161, or all three. In some embodiments, the generator 155 is a DC generator. The generator 155 includes a source of the mechanical energy, such as a turbine, an internal combustion engine, etc. The generator 155 converts the mechanical energy into DC power and outputs the DC power to the battery charging circuit 161. The battery charging circuit 161 charges the battery 160 by outputting DC power to the battery 160 while monitoring the charge of the battery 160. Once the battery 160 is fully charged, the battery charging circuit 161 discontinues outputting DC power to the battery 160. The battery charging circuit 161 of the standby power source 150 is coupled to a bidirectional DC/DC converter 165 of the standby power sub-system 145. The bidirectional DC/DC converter 165 converts low-voltage DC power to high-voltage DC power, or high-level DC power to low-level DC power, depending on its mode of operation. The bidirectional DC/DC converter 165 is electrically coupled to the bidirectional DC/AC inverter 170. In one mode, the bidirectional DC/AC inverter 170 inverts DC power received from the bidirectional DC/DC converter 165 to AC power for output to the ATS 130. In another mode, the bidirectional DC/AC inverter 170 rectifies AC power from ATS 130 to DC power for output to the bidirectional DC/DC converter 165. The bidirectional DC/AC inverter 170 is electrically coupled to the auxiliary panel 115 and the grid 105 through the ATS 130.

When grid-tied, the energy harvesting system 100 provides power from the energy portal 107 to the grid 105 similar to the embodiment shown in Fig. 2a. In grid-tied mode, AC power from the grid 105, which includes AC power from the energy portal 107, powers the auxiliary loads 124 as well as the standard loads 140. In grid-tied mode, the AC power from the grid 105 may also used to charge the battery 160 of the standby power source 150. When charging the battery 160 in grid-tied mode, the standby power sub-system 145 receives AC power from the grid 105 via the ATS 130, while the generator 155 remains off. The AC power is rectified to high level DC power by the bidirectional DC/AC inverter 170. The high level DC power is then converted to low level DC power by the bidirectional DC/DC converter 165. The low level DC power is then output to the battery charging circuit 161. The battery charging circuit 161 then charges the battery 160 until the battery 160 is fully charged.

When the grid 105 is operating abnormally, the ATS 130 disconnects the normal circuit connected to the grid 105, and switches to the emergency position, thus disconnecting the energy harvesting system 100 from the grid 105. When off-grid, the auxiliary loads 124 can receive AC power from the energy portal 107, the standby power sub-system 145, or both. When powering the auxiliary loads 124 in off-grid operation, the standby power sub-system 145 receives low level DC power from the standby power source 150. The low level DC power is then converted to high level DC power by the bidirectional DC/DC converter 165. The high level DC power is then inverted to AC power by the bidirectional DC/AC inverter 170. The AC power is then sent to the auxiliary loads 124 through the auxiliary panel 120.

During off-grid operation, the ATS 130 requests the standby power source 150 to provide low-level DC power from one or both of the generator 155 and battery 160. For instance the standby power source 150 provides DC power from the battery 160 until the voltage of the battery pack 160 becomes low. When the voltage of the battery pack 160 becomes low, the generator 155 begins outputting DC power to the battery charging circuit 161 to charge the battery 160 while the standby power source 150 continues to provide DC power to the standby power sub-system 145. Once the grid 105 is operating normally, the ATS 130 communicates with the standby power source 150 to cease outputting power. The ATS 130 reconnects the energy harvesting system 100 to the grid 105.

In some embodiments, the standby power source 150 includes a generator 155, but no battery 160 nor battery charging circuit 161. During off-grid operation, the ATS 130 disconnects the normal circuit connected to the grid 105 and communicates with the generator 155 to turn on. Once on, the generator 155 indicates (or the ATS 130 detects) that the generator 155 is operational and providing power with acceptable characteristics. The ATS 130 then enables AC power from the standby power sub-system 145 to power the auxiliary loads 124 through the auxiliary panel 120. Once the grid 105 is operating normally, the ATS 130 communicates with the generator 155 to turn the generator 155 off. The ATS 130 reconnects the energy harvesting system 100 to the grid 105.

In some embodiments, the standby power source 150 includes a battery 160 and battery charging circuit 161, but no generator 155. During off-grid operation, the standby power sub-system 145 converts the DC power from the battery 160 to AC power until the battery 160 is discharged or the energy harvesting system 100 returns to grid-tied operation. Once the battery 160 is discharged of DC power, the standby power sub-system 145 stops providing AC power to the auxiliary loads 124 through the auxiliary panel 120. Once the grid 105 is operating normally, the ATS 130 reconnects the energy harvesting system 100 to the grid 105. The battery charging circuit 161 then charges the battery 160 using power from the grid 105 as explained above.

In some embodiments, the main breaker panel 135 is not provided. Rather, both the standards loads 140 and aux loads 124 are coupled to the auxiliary panel 120.

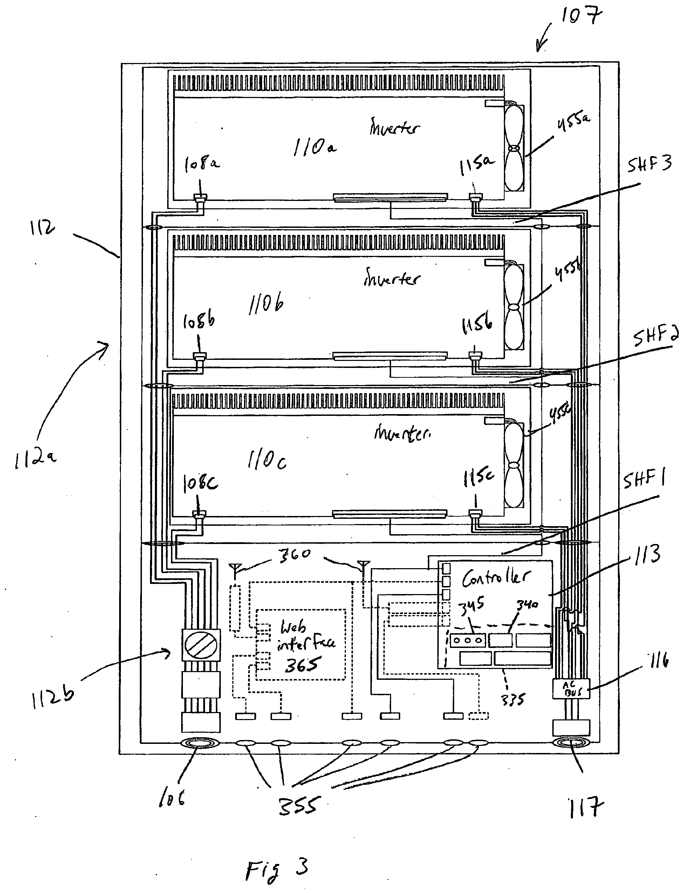

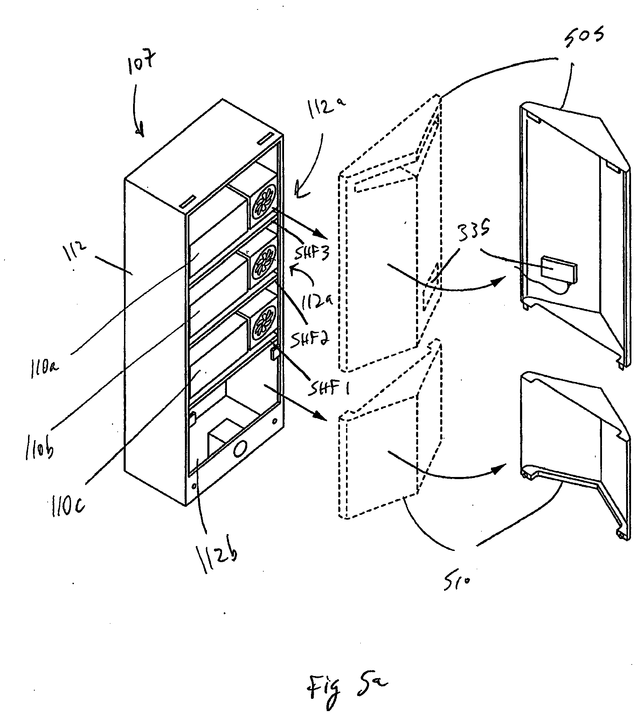

Fig. 3 illustrates the energy portal 107 of the energy harvesting system 100. The energy portal 107 has DC inputs 106a, 106b, and 106c (collectively, "DC inputs 106"). The DC inputs 106a, 106b, and 106c are coupled to the DC inputs 108a, 108b, and 108c of each inverter 110a, 110b, and 110c, respectively. The inverters 110a, 110b, and 110c slide into the housing 112 of the energy portal 107. Each inverter 110 receives DC power from its respective DC input 108, inverts the DC power to AC power, and outputs the AC power to the AC bus 116. The inverters can be placed on shelves SHF 1-3 (Figs. 5a-6), on tracks, or on other platforms and fixed in place via fasteners or other mechanisms.

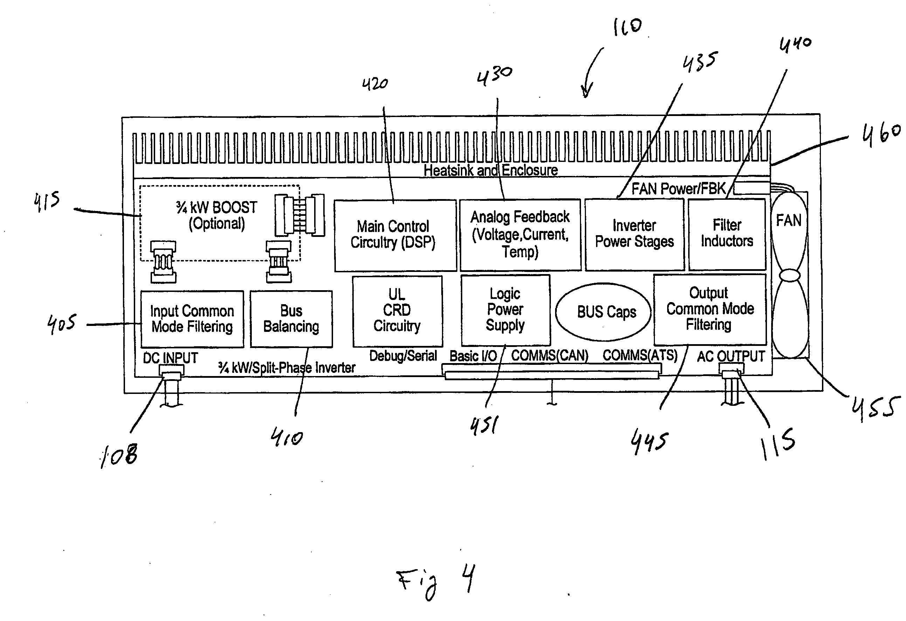

Fig. 4 is a sectional view of one inverter 110. The inverter 110 has a DC input 108 for receiving DC power from one of the power sources 104. The DC power is then filtered through the input common mode filter 405. The bus balancing controller 410 regulates the DC bus voltages. In some embodiments, the inverter 110 includes a 3 or 4 kW boost 415. When the received DC power is below a desired voltage level for proper or optimized operation of the inverter 110, the 3/4 kW boost 415 boosts (or increases) the voltage of the received DC power to the desired level. When the received DC power is at a desirable level, the DC power bypasses the 3/4 kW boost 415. In some embodiments, the 3/4 kW boost 415 is not included in the inverter 110. For example, if the power source 105 coupled to the inverter 110 consistently outputs DC power at a desired level, the 3/4 kW boost 415 is not included, reducing the cost of the inverter 110.

The main control circuitry 420 controls the inverter 110 and its components. The main control circuitry 420 can be a digital signal processor with a processor and memory for storing instructions executed by the processor, or similar device. The analog feedback circuit 430 monitors the voltage, temperature, and current of the inverter 110. The inverter power stage 435 includes power switching elements (e.g., MOSFETs) controlled by the main control circuit 420 to invert the received DC power to AC power. After the DC power is inverted to AC power, the filter inductors 440 and output common mode filter 445 filter the AC power. The filtered AC power is output to the AC bus 116 via an AC output 115. The logic power supply 451 supplies voltage to the main control circuitry 420 as well as the other circuitry within the inverter 110. The logic power supply 451 provides one or more regulated DC voltages to power the components. The inverter 110 further includes a fan 455 and heatsink 460 to help maintain the inverter 110 at an appropriate or desired operating temperature. The inverter 110 may also include UL CRD circuitry 463, designed to conform with certain UL requirements, when compliance with such requirements is desired. The inverter 110 also includes bus capacitors 465.

The inverter 110 can have a power rating of three kilowatts or four kilowatts. A three kilowatt inverter outputs three kilowatts of AC power during normal operation. A four kilowatt inverter outputs four kilowatts of AC power during normal operation. The three kilowatt version of the inverter 110 contains some different components (e.g., lower rated capacitors, etc.) than the four kilowatt version of the inverter 110. However, the basic architecture of the inverter 110 remains essentially the same regardless of whether a three or four kilowatt configuration is implemented. The configuration of the inverter 110 may be selected based on its, associated power source 104. For instances, a three kilowatt configuration may be optimal for one type of power source 104, and a four kilowatt configuration may be optimal for another type of power source 104 (e.g., a higher output power source 104).

The modular architecture of the energy harvesting system 100 is designed such that one, two, or three inverters (inverters 110a, 110b, and 110c) can be installed within the housing 112 (e.g., within the bay 112a) of the energy portal 107. Each installed inverter 110 may have either a three kilowatt or four kilowatt configuration. The modular architecture allows for nine configurations of renewable power sources 104 and inverters 110 of the energy harvesting system 100. The power rating of the energy harvesting system 100 is dependent on the number of inverters 110 and the power ratings of each inverter 110. The energy harvesting system 100 can, therefore, have a total power rating of three kilowatts (i.e., one three-kilowatt inverter 110 in one slot), four kilowatts, six kilowatts, seven kilowatts, eight kilowatts, nine kilowatts, ten kilowatts, eleven kilowatts, or twelve kilowatts (i.e., four-kilowatt inverters 110 in all three slots). This modularity allows the energy harvesting system 100 to be scalable to the changing needs of the user. For instances, a user may start with a single power source 104 and inverter 110, then later, purchase and install additional power sources 104 and inverters 110. Table 1 lists a number of different configurations of inverters 110 in the portal 107 and the resulting power ratings of the portal 100. In some embodiments, multiple energy portals 107 can be used where AC buses of each energy portal output to the grid.

**Table 1**

| **Total Power Rating** | **First Inverter** | **Second Inverter** | **Third Inverter** |
|---|---|---|---|
| 3 kW | 3 kW | NONE | NONE |
| 4 kW | 4 kW | NONE | NONE |
| 6 kW | 3 kW | 3 kW | NONE |
| 7 kW | 3 kW | 4 kW | NONE |
| 8 kW | 4 kW | 4 kW | NONE |
| 9 kW | 3 kW | 3 kW | 3 kW |
| 10 kW | 3 kW | 3 kW | 4 kW |
| 11 kW | 3 kW | 4 kW | 4 kW |
| 12 kW | 4 kW | 4 kW | 4 kW |

Returning to Fig. 3, the AC power from the inverters 110a, 110b, and 110c is output from the AC outputs 450a, 450b, and 450c to the AC bus 116. The AC bus 116 combines the AC power from the outputs of the inverters 110. The power on the AC bus 116 is provided to an AC output 117 of the energy portal 107.

The controller 113 is contained within the housing 112. However, the controller 113 may be located external to the housing 112 of the energy portal 107. The controller 113 may be a computer, microcontroller, or similar device and, as a consequence, the controller may include a processor (not shown) and memory (not shown). The controller 113 is connected to user interface 335 (Fig. 3). The user interface 335 includes a local display screen 340 and buttons 345. The controller 113 monitors and controls the inverters 110 by, for example, executing software stored in the memory within the controller. The user interface 335 receives data inputs from the processor and buttons 345 and outputs data to the local display screen 340.

The controller 113 communicates with the ATS 130 when the ATS 130 couples the auxiliary loads 124 to AC power from the grid 105, from the AC bus 116 of the energy portal 107, and/or from the standby power sub-system 145, as described above. The controller 113 may also communicate with the ATS 130 of the standby power sub-system 145 to turn the generator 155 on and off. The controller 113 may also directly communicate with and control the standby power sub-system 145.

The user may communicate with the controller 113 via wired connections (e.g., using the communication ports 355) or wirelessly through the antennas 360. Communications may relate to diagnostic checks, system monitoring, and powering the energy portal 107 on and off, among other things. In some embodiments, the controller 113 includes a web interface 365. The web interface 365 allows for user communication with the energy harvesting system 100 across the Internet. For instance, the energy harvesting system 100 may communicate to a remote web server hosting a website that is accessible by a user via a web browser. In some instances, the energy harvesting system 100 may host a web site remotely accessible by a user via the web interface 365.

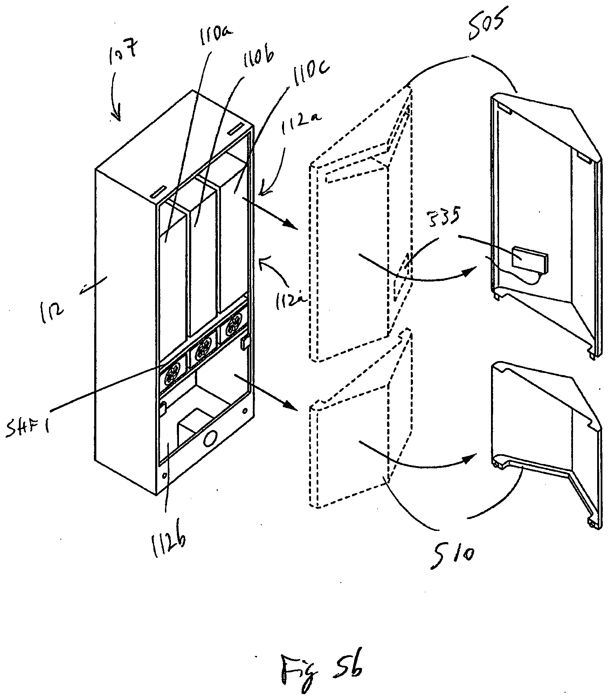

Figs. 5a and 5b are perspective views of the housing 112 of the energy portal 107. In the embodiment shown in Figs. 5a and 5b, the housing includes a top cover 505 and a bottom cover 510 (removed from the housing 112). The user interface 335 is shown on the top cover 505, although the user interface 335 is on the bottom cover 510 is some embodiments. Fig. 5a shows the inverters 110a, 110b, and 110c, positioned in the bay 112a, in a horizontal, stacked relationship. Fig. 5b shows the inverters 110a, 110b, and 110c, positioned in the bay 112a, in a vertical, stacked relationship. When attached to the housing or in place, the top cover 505 covers the bay 112a of the housing 112, and the bottom cover 510 covers a bottom portion 112b of the housing 112. The housing 112 may be wall-mounted or free standing. Preferably, each component of the energy harvesting system 100 weighs less than thirty pounds. For example, each inverter 110 is less than thirty pounds and the housing is constructed to be similarly lightweight. When so constructed, a single individual (installer) may readily lift and carry the components during the installation of an energy harvesting system 100. For instances, in a residential basement installation, a single installer can unload the components of the energy harvesting system 100 components from a vehicle, carry them down a staircase, and lift them for wall mounting.

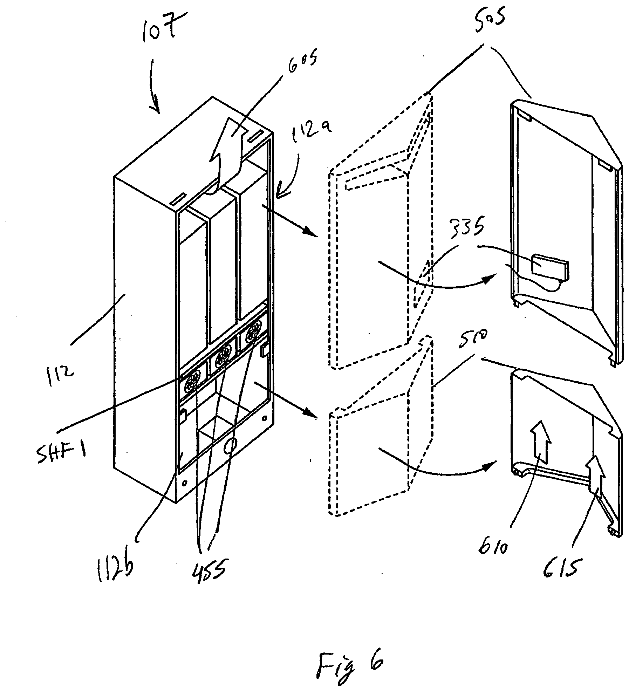

Fig. 6 is a perspective view of the housing 112 showing the airflow of the energy portal 107. The airflow is shown by arrows 605, 610, and 615. The airflow is directed by the fans 455. Cool air enters into the housing 112 via one or more openings (not shown) in the lower portion of the bottom cover 510 and/or the bottom portion 112b. The air travels through the housing 112 to help maintain the operating temperature of the energy portal 107 below a level where components could fail or be damaged. The air then exits through one or more openings (not shown) in the upper portion of the top cover 505 and/or the inverter section 112a.

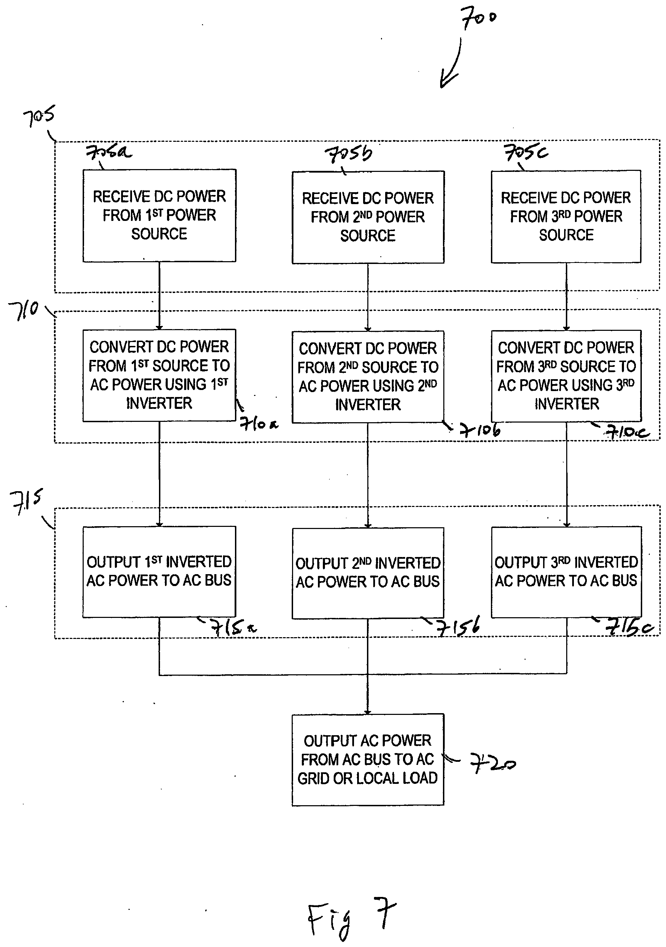

Fig. 7 illustrates a method 700 for harvesting energy using the energy harvesting system 100. The energy harvesting system 100 receives DC power from the renewable power sources 104a, 104b, and 104c (Step 705). The DC power from the renewable powers sources 104a, 104b, and 104c is then inverted to AC power by the inverters 110a, 110b, and 110c (Step 710). The AC power from the inverters 110a, 110b, and 110c is then output to the AC bus 116 (Step 715). The AC power from the AC bus 116 is then output to the grid 105 or to auxiliary load 124 (Step 720).

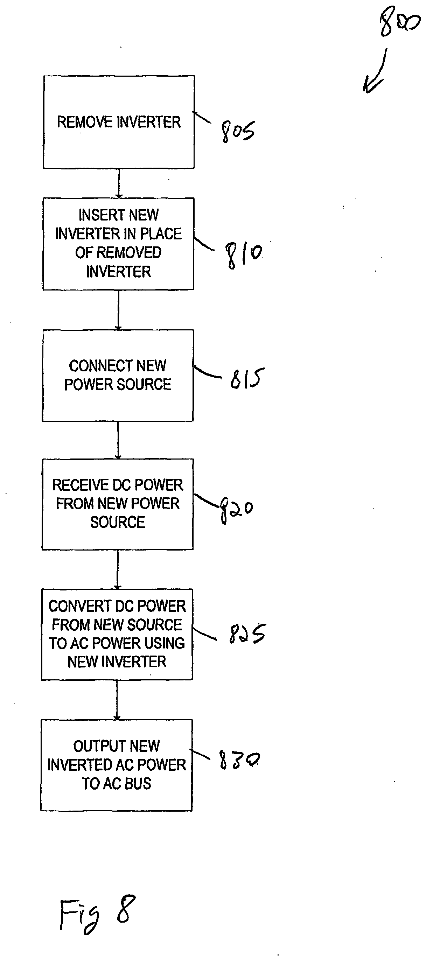

The user may alter the total power rating of the energy harvesting system 100 by adding, removing, or replacing one or more of the inverters 110. Fig. 8 illustrates a method 800 for replacing one of the inverters 110a, 110b, and 110c with another one of the inverters 110 having a different power rating. Method 800 begins with the removal of one of the inverters 110 installed in the energy harvesting system 100 (Step 805). The inverter 110 selected for installation (the "new inverter 110") is inserted in the energy portal 107, for instance, in place of the inverter 110 removed in step 805 (Step 810). The new inverter 110 is then connected to the power source 104 (Step 815). In some instances, the power source 104 is also new and has a different power output than the power source 104 used with the inverter 110 removed in step 805. The energy harvesting system 100 receives DC power from the power source 104 connected in step 815 (Step 820). The DC power from the power source 104 is then inverted to AC power by the new inverter 110 (Step 825). The AC power from the new inverter 110 is then output to the AC bus 116 (Step 830).

The modular energy harvesting system enables the harvesting or collection of electrical power from various combinations of energy sources (such as solar arrays) and can be easily modified (such as by installing an additional inverter in the bay) to accommodate adding additional energy sources (such as an additional solar array) at the facility where the portal 107 is installed. Thus, the energy harvesting system is applicable in various residential and commercial scenarios. The modular design and selective coupling to the grid and local loads provides an easy-to-use, easy-to-customize, and easy-to-alter energy harvesting system. Various features and advantages of the invention are set forth in the following claims.

## Claims

1. A modular energy harvesting portal comprising:
a housing (112) having a bay (112a);
a plurality of inverters (110a, 110b, 110c) including
a first inverter (110a) having
a first DC input (108a) for receiving a DC power signal from a first DC power source (104a),
a first AC output (115a), and
a first power rating, the first inverter (110a) converting DC power received at the first DC input (108a) to AC power and outputting AC power at the first AC output (115a);
a second inverter (110b) having
a second DC input (108b) for receiving a DC power signal from a second DC power source (104b),
a second AC output (115b), and
a second power rating, the second inverter (110b) converting DC power received at the second DC input (108b) to AC power and outputting AC power at the second AC output (115b),
the plurality of inverters (110a, 110b, 110c) positioned in the bay (112a);
a controller (113) configured to communicate with each of the plurality of inverters (110a, 110b, 110c); and
an AC bus (116) connecting the first AC output (115a) and the second AC output (115b);
the modular energy harvesting portal having a power rating dependent on the number of inverters in the plurality of inverters (110a, 110b, 110c) and the power rating of each of the inverters of the plurality of inverters (110a, 110b, 110c)
**characterized in that**,
the controller (113) selectively controls a grid connection switch to couple the AC bus to one of an AC grid and a local load.

2. The energy harvesting portal of claim 1, further comprising a third inverter (110c) having
a third DC input (108c) for receiving a DC power signal from a third DC power source (104c),
a third AC output (115c), and
a third power rating, the third inverter (110c) converting DC power received at the third DC input (108c) to AC power and outputting AC power at the third AC output (115c);

3. The energy harvesting portal of claim 2, wherein the AC bus (116) further connects the first AC output (115a), the second AC output (115b), and the third AC output (115c).

4. The energy harvesting portal of claim 1, wherein the housing (112) further includes
a first power source input port (106a) configured to be coupled to the first source (104a) to supply power to the first power input (108a), and
a second power source input port (106b) configured to be coupled to the second source (104b) to supply power to the second power input (108b).

5. The energy harvesting portal of claim 1, wherein the first inverter (110a) and second inverter (110b) generate split phase AC power.

6. The energy harvesting portal of claim 1, wherein the controller (113) includes
a user interface (335), having a local display screen (340) and buttons (345);
a processor; and
a memory, having software.

7. The energy harvesting portal of claim 6, wherein the user interface (335) receives data input from and outputs data to one of the local display screen (340), the buttons (345), a local computer device wirelessly communicating with the controller, and a remote computing device communicating via the Internet with the controller (113).

8. The energy harvesting portal of claim 7, wherein the user interface (335) receives information regarding operation of the energy harvesting portal from the processor and causes the information to be displayed to one of the local display screen (340), a client computing device, and the remote computing device communicating via the Internet with the controller (113).

9. The energy harvesting portal of claim 1, wherein the controller (113) selectively couples:
a local load (124) to one of the AC grid (105) and the AC bus (116); and
the AC bus (116) to one of the local load (124) and the AC grid (105).

10. The energy harvesting portal of claim 1, wherein the first and second power source (14a, 104b) are different renewable energy power sources.

11. The energy harvesting portal of claim 1, wherein the controller (113) is operable to disable one of the first inverter (110a) and the second inverter (110b) based on a determination that a single inverter is operable to meet the demand for DC to AC conversion.

12. The energy harvesting portal of claim 1, wherein the AC bus (116) is electrically coupled to one of a second AC bus of a second energy harvesting portal.

13. A method of harvesting energy using a modular energy harvesting portal (107) according to claim 1, the method comprising:
receiving power from the first DC power source (104a); converting the power from the first DC power source (104a) to AC power using the first inverter (110a);
providing the AC power from the first inverter (110a) to the AC bus (116); receiving power from the second DC power source (104b);
converting the power from the second power source (104b) to AC power using the second inverter (110b);
providing the AC power from the second inverter (110b) to the AC bus (116); and
outputting the AC power from the AC bus (116) to the at least one grid connection switch controlled by the controller (130);
**characterized by**
controlling the at least one grid connection switch to connect the AC power from the AC bus (116) to one of an AC grid (105) and a local load (124).

14. The method of claim 13, further comprising
receiving power from a third power source (104c);
converting the power from the third power source (104c) to AC power using a third inverter (110c); and
providing the AC power from the third inverter (110c) to the AC bus (116).

15. The method of claim 13, further comprising coupling the at least one grid connection switch to a second grid connection switch of a second energy harvesting portal.

16. An energy system comprising:
a modular energy harvesting portal according to claim 1; and
a standby power sub-system (145), including
a DC power source (150);
a bidirectional DC/DC converter (165), the bidirectional DC/DC converter (165) receiving DC power at a first DC level from the DC power source (150) and converting the power to DC power at a second DC level; and
a bidirectional DC/AC inverter (170), the bidirectional DC/AC inverter receiving DC power at the second DC level from the DC/DC converter (165) and inverting the power to AC power, the bidirectional DC/AC inverter (170) further coupled to the AC grid (105).

17. The energy system of claim 16, wherein the DC power source (150) of the standby power sub-system (145) is a battery pack (160), the battery pack (160) configured to receive power from the AC grid (105) via the bidirectional DC/AC inverter (170) and bidirectional DC/DC converter (165).

18. The energy system of claim 16, wherein the DC power source (150) of the standby power sub-system (145) is a DC generator (155).

19. The energy system of claim 16, wherein the DC power source (150) of the standby power sub-system (145) includes
a generator (155); and
a battery pack (160), the battery pack able to receive DC power from at least one of the generator (165) and the AC grid (105) via the bidirectional DC/AC inverter (107) and bidirectional DC/DC converter (165).

## Patentansprüche

1. Modulares Energiegewinnungsportal, umfassend:
ein Gehäuse (112) mit einem Schacht (112a);
eine Mehrzahl von Invertern (110a, 110b, 110c), umfassend:
einen ersten Inverter (110a) mit
einem ersten Gleichstromeingang (108a), um ein Gleichstromsignal von einer ersten Gleichstromquelle (104a) zu empfangen, und
einem ersten Wechselstromausgang (115a), und
einer ersten Anschlussleistung, wobei der erste Inverter (110a) den Gleichstrom, welcher an dem ersten Gleichstromeingang (108a) empfangen wird, in Wechselstrom umwandelt und Wechselstrom an dem ersten Wechselstromausgang (115a) ausgegeben wird;
einen zweiten Inverter (110b) mit
einem zweiten Gleichstromeingang (108b), um ein Gleichstromsignal von einer zweiten Gleichstromquelle (104b) zu empfangen,
einem zweiten Wechselstromausgang (115b), und
einer zweiten Anschlussleistung, wobei der zweite Inverter (110b) den Gleichstrom, welcher an dem zweiten Gleichstromeingang (108b) empfangen wird, in Wechselstrom umwandelt und Wechselstrom an dem zweiten Wechselstromausgang (115b) ausgegeben wird,
wobei die Mehrzahl von Invertern (110a, 110b, 110c) in dem Schacht (112a) angeordnet ist;
eine Steuerung (113), die konfiguriert ist, mit jedem der Mehrzahl von Invertern (110a, 110b, 110c) zu kommunizieren; und
einen Wechselstrombus (116), welcher den ersten Wechselstromausgang (115a) und den zweiten Wechselstromausgang (115b) verbindet;
wobei das modulare Energiegewinnungsportal eine Anschlussleistung aufweist, die von der Anzahl der Inverter in der Mehrzahl von Invertern (110a, 110b, 110c) und der Anschlussleistung von jedem der Inverter in der Mehrzahl von Invertern (110a, 110b, 110c) abhängig ist,
**dadurch gekennzeichnet, dass**
die Steuerung (113) selektiv einen Netzanschlussschalter steuert,
um den Wechselstrombus mit einem Wechselstromnetz oder einem lokalen Verbraucher zu koppeln.

2. Energiegewinnungsportal nach Anspruch 1, ferner umfassend einen dritten Inverter (110c) mit
einem dritten Gleichstromeingang (108c), um ein Gleichstromsignal von einer dritten Gleichstromquelle (104c) zu empfangen,
einem dritten Wechselstromausgang (115c), und
einer dritten Anschlussleistung, wobei der dritte Inverter (110c) den Gleichstrom, welcher an dem dritten Gleichstromeingang (108) empfangen wird, in Wechselstrom umwandelt und Wechselstrom an dem dritten Wechselstromausgang (115c) ausgegeben wird.

3. Energiegewinnungsportal nach Anspruch 2, wobei der Wechselstrombus (116) ferner den ersten Wechselstromausgang (115a), den zweiten Wechselstromausgang (115b) und den dritten Wechselstromausgang (115c) verbindet.

4. Energiegewinnungsportal nach Anspruch 1, wobei das Gehäuse (112) ferner
einen ersten Stromquellen-Eingangsanschluss (106a), der konfiguriert ist, zur Stromversorgung des ersten Stromeingangs (108a), mit der ersten Quelle (104a) gekoppelt zu werden, und
einen zweiten Stromquellen-Eingangsanschluss (106b), der konfiguriert ist, zur Stromversorgung des zweiten Stromeingangs (108b), mit der zweiten Quelle (104b) gekoppelt zu werden
umfasst.

5. Energiegewinnungsportal nach Anspruch 1, wobei der erste Inverter (110a) und der zweite Inverter (110b) aufgeteilte Wechselstromphasen erzeugen.

6. Energiegewinnungsportal nach Anspruch 1, wobei die Steuerung (113)
eine Anwenderschnittstelle (335) mit einem lokalen Bildschirm (340) und Schaltflächen (345);
einen Prozessor; und
einen Speicher mit einer Software
umfasst.

7. Energiegewinnungsportal nach Anspruch 6, wobei die Anwenderschnittstelle (335) eine Dateneingabe von dem lokalen Bildschirm (340), den Schaltflächen (345), einer lokalen Computervorrichtung, die drahtlos mit der Steuerung kommuniziert, oder einer entfernten Rechenvorrichtung, die über das Internet mit der Steuerung (113) kommuniziert, empfängt und Daten an einen von diesen ausgibt.

8. Energiegewinnungsportal nach Anspruch 7, wobei die Anwenderschnittstelle (335) Informationen hinsichtlich des Betriebs des Energiegewinnungsportals von dem Prozessor erhält und die Abbildung der Informationen auf dem lokalen Bildschirm (340), einer Client-Computervorrichtung oder der entfernten Rechenvorrichtung, die über das Internet mit der Steuerung (113) kommuniziert, verursacht.

9. Energiegewinnungsportal nach Anspruch 1, wobei die Steuerung (113)
einen lokalen Verbraucher (124) selektiv mit dem Wechselstromnetz (105) oder dem Wechselstrombus (116) koppelt; und den Wechselstrombus (116) selektiv mit dem lokalen Verbraucher (124) oder dem Wechselstromnetz (105) koppelt.

10. Energiegewinnungsportal nach Anspruch 1, wobei die erste und die zweite Stromquelle (104a, 104b) unterschiedliche erneuerbare Energiestromquellen sind.

11. Energiegewinnungsportal nach Anspruch 1, wobei die Steuerung (113) bedienbar ist, den ersten Inverter (110a) oder den zweiten Inverter (110b), basierend auf der Feststellung, dass ein einzelner Inverter bedienbar ist, um den Bedarf nach Gleichstrom in Wechselstrom-Umwandlung zu erfüllen, zu deaktivieren.

12. Energiegewinnungsportal nach Anspruch 1, wobei der Wechselstrombus (116) elektrisch mit einem zweiten Wechselstrombus eines zweiten Energiegewinnungsportals gekoppelt ist.

13. Verfahren zum Gewinnen von Energie unter Verwendung eines modularen Energiegewinnungsportals (107), nach Anspruch 1, umfassend:
Empfangen des Stroms der ersten Gleichstromquelle (104a);
Umwandeln des Stroms der ersten Gleichstromquelle (104a) in Wechselstrom unter Verwendung des ersten Inverters (110a);
Bereitstellen des Wechselstroms des ersten Inverters (110a) für den Wechselstrombus (116);
Empfangen des Stroms der zweiten Gleichstromquelle (104b);
Umwandeln des Stroms der zweiten Gleichstromquelle (104b) in Wechselstrom unter Verwendung des zweiten Inverters (110b);
Bereitstellen des Wechselstroms des zweiten Inverters (110b) für den Wechselstrombus (116);
und
Ausgeben des Wechselstroms des Wechselstrombusses (116) an mindestens einen Netzanschlussschalter, der durch die Steuerung (130) kontrolliert wird;
**gekennzeichnet durch**
Steuern des mindestens einen Netzanschlussschalters, um den Wechselstrom des Wechselstrombusses (116) mit einem Wechselstromnetz (105) oder einem lokalen Verbraucher (124) zu verbinden.

14. Verfahren nach Anspruch 13, ferner umfassend:
Empfangen des Stroms einer dritten Stromquelle (104c); Umwandeln des Stroms der dritten Stromquelle (104c) in Wechselstrom unter Verwendung eines dritten Inverters (110c); und
Bereitstellen des Wechselstroms des dritten Inverters (110c) für den Wechselstrombus (116).

15. Verfahren nach Anspruch 13, ferner umfassend:
Koppeln des mindestens einen Netzanschlussschalters mit einem zweiten Netzanschlussschalter eines zweiten Energiegewinnungsportals.

16. Energiesystem, umfassend:
Ein modulares Energiegewinnungsportal nach Anspruch 1; und
ein Standby-Stromversorgungsuntersystem (145), umfassend:
eine Gleichstromquelle (150);
einen bidirektionalen Gleichstrom/Gleichstrom-Wandler (165), wobei der bidirektionale Gleichstrom/Gleichstrom-Wandler (165) den Gleichstrom auf einem ersten Gleichstromniveau von der Gleichstromquelle (150) empfängt und den Strom in Gleichstrom auf einem zweiten Gleichstromniveau umwandelt; und
einen bidirektionalen Gleichstrom/Wechselstrom-Inverter (170), wobei der bidirektionale Gleichstrom/Wechselstrom-Inverter (170) ferner mit dem Wechselstromnetz (105) gekoppelt ist.

17. Energiesystem nach Anspruch 16, wobei die Gleichstromquelle (150) des Standby-Stromversorgungsuntersystems (145) ein Batteriepack (160) ist, wobei das Batteriepack (16) konfiguriert ist, Strom des Wechselstromnetzes (105) über den bidirektionalen Gleichstrom/Wechselstrom-Inverter (170) und den bidirektionalen Gleichstrom/Gleichstrom-Wandler (165) zu empfangen.

18. Energiesystem nach Anspruch 16, wobei die Gleichstromquelle (150) des Standby-Stromversorgungsuntersystem (145) ein Gleichstromgenerator (155) ist.

19. Energiesystem nach Anspruch 16, wobei die Gleichstromquelle (150) des Standby-Stromversorgungsuntersystems (145)
einen Generator (155); und
ein Batteriepack (160) umfasst, wobei das Batteriepack fähig ist, Gleichspannung von dem Generator (165) und/oder dem Wechselstromnetz (105) über den bidirektionalen Gleichstrom/Wechselstrom-Inverter (107) und/oder dem bidirektionalen Gleichstrom/Gleichstrom-Wandler (165) zu empfangen.

## Revendications

1. Portail de collecte d'énergie modulaire comprenant :
un boîtier (112) ayant une baie (112a) ;
une pluralité d'onduleurs (110a, 110b, 110c) comportant
un premier onduleur (110a) ayant
une première entrée en courant continu (108a) pour recevoir un signal de puissance de courant continu à partir d'une première source de puissance de courant continu (104a)
une première sortie en courant alternatif (115a), et
une première puissance nominale, le premier onduleur (110a) convertit la puissance de courant continu reçue au niveau de la première entrée en courant continu (108a) en une puissance de courant alternatif et délivre en sortie une puissance de courant alternatif au niveau de la première sortie en courant alternatif (115a) ;
un deuxième onduleur (110b) ayant
une deuxième entrée en courant continu (108b) pour recevoir un signal de puissance de courant continu à partir d'une deuxième source de puissance de courant continu (104b),
une deuxième sortie en courant alternatif (115b), et
une deuxième puissance nominale, le deuxième onduleur (110b) convertit la puissance de courant continu reçue au niveau de la deuxième entrée en courant continu (108b) en une puissance de courant alternatif et délivre en sortie une puissance de courant alternatif au niveau de la deuxième sortie en courant alternatif (115b),
la pluralité d'onduleurs (110a, 110b, 110c) positionnés dans la baie (112a);
un dispositif de commande (113) configuré pour communiquer avec chacun de la pluralité d'onduleurs (110a, 110b, 110c) ; et
un bus de courant alternatif (116) reliant la première sortie en courant alternatif (115a) et la deuxième sortie en courant alternatif (115b) ;
le portail de collecte d'énergie modulaire ayant une puissance nominale dépendant du nombre d'onduleurs dans la pluralité d'onduleurs (110a, 110b, 110c) et de la puissance nominale de chacun des onduleurs de la pluralité d'onduleurs (110a, 110b, 110c),
**caractérisé en ce que**,
le dispositif de commande (113) commande de manière sélective un commutateur de raccordement au réseau électrique pour coupler le bus de courant alternatif à l'un(e) d'un réseau électrique de courant alternatif et d'une charge locale.

2. Portail de collecte d'énergie de la revendication 1, comprenant en outre un troisième onduleur (110c) ayant
une troisième entrée en courant continu (108c) pour recevoir un signal de puissance de courant continu à partir d'une troisième source de puissance de courant continu (104c),
une troisième sortie en courant alternatif (115c), et
une troisième puissance nominale, le troisième onduleur (110c) convertit la puissance de courant continu reçue au niveau de la troisième entrée en courant continu (108c) en une puissance de courant alternatif et délivre en sortie une puissance de courant alternatif au niveau de la troisième sortie en courant alternatif (115c) ;

3. Portail de collecte d'énergie de la revendication 2, dans lequel le bus de courant alternatif (116) relie en outre la première sortie en courant alternatif (115a), la deuxième sortie en courant alternatif (115b) et la troisième sortie en courant alternatif (115c).

4. Portail de collecte d'énergie de la revendication 1, dans lequel le boîtier (112) comporte en outre
un premier port d'entrée de source de puissance (106a) configuré pour être couplé à la première source (104a) pour fournir de la puissance à la première entrée de puissance (108a), et
un deuxième port d'entrée de source de puissance (106b) configuré pour être couplé à la deuxième source (104b) pour fournir de la puissance à la deuxième entrée de puissance (108b).

5. Portail de collecte d'énergie de la revendication 1, dans lequel le premier onduleur (110a) et le deuxième onduleur (110b) génèrent une puissance de courant alternatif à deux phases.

6. Portail de collecte d'énergie de la revendication 1, dans lequel le dispositif de commande (113) comporte
une interface utilisateur (335), ayant un écran d'affichage local (340) et des boutons (345) ;
un processeur ; et
une mémoire, ayant un logiciel.

7. Portail de collecte d'énergie de la revendication 6, dans lequel l'interface utilisateur (335) reçoit des données introduites à partir de l'un parmi l'écran d'affichage local (340), les boutons (345), un dispositif informatique local communiquant de manière sans fil avec le dispositif de commande, et un dispositif informatique distant communiquant via internet avec le dispositif de commande (113) et délivre en sortie des données à celui-ci.

8. Portail de collecte d'énergie de la revendication 7, dans lequel l'interface utilisateur (335) reçoit des informations concernant le fonctionnement du portail de collecte d'énergie à partir du processeur et provoque l'affichage des informations sur l'un parmi l'écran d'affichage local (340), un dispositif informatique client, et le dispositif informatique distant communiquant via internet avec le dispositif de commande (113).

9. Portail de collecte d'énergie de la revendication 1, dans lequel le dispositif de commande (113) couple de manière sélective :
une charge locale (124) à l'un parmi le réseau électrique de courant alternatif (105) et le bus de courant alternatif (116) ; et
le bus de courant alternatif (116) à l'un(e) parmi la charge locale (124) et le réseau électrique de courant alternatif (105).

10. Portail de collecte d'énergie de la revendication 1, dans lequel les première et deuxième sources de puissance (14a, 104b) sont des sources d'alimentation en énergie renouvelable différentes.

11. Portail de collecte d'énergie de la revendication 1, dans lequel le dispositif de commande (113) peut fonctionner pour désactiver l'un du premier onduleur (110a) et du deuxième onduleur (110b) sur la base d'une détermination selon laquelle un seul onduleur peut fonctionner pour répondre à la demande de conversion de courant continu en courant alternatif.

12. Portail de collecte d'énergie de la revendication 1, dans lequel le bus de courant alternatif (116) est électriquement couplé à l'un d'un deuxième bus de courant alternatif d'un deuxième portail de collecte d'énergie.

13. Procédé de collecte d'énergie en utilisant un portail de collecte d'énergie modulaire (107) selon la revendication 1, le procédé comprenant le fait :
de recevoir de la puissance à partir d'une première source de puissance de courant continu (104a) ;
de convertir la puissance provenant de la première source de puissance de courant continu (104a) en une puissance de courant alternatif en utilisant le premier onduleur (110a) ;
de fournir de la puissance de courant alternatif provenant du premier onduleur (110a) au bus de courant alternatif (116) ;
de recevoir de la puissance à partir d'une deuxième source de puissance de courant continu (104b) ;
de convertir la puissance provenant de la deuxième source de puissance (104b) en une puissance de courant alternatif en utilisant le deuxième onduleur (110b) ;
de fournir de la puissance de courant alternatif provenant du deuxième onduleur (110b) au bus de courant alternatif (116) ; et
de délivrer en sortie la puissance de courant alternatif provenant du bus de courant alternatif (116) à l'au moins un commutateur de raccordement au réseau électrique commandé par le dispositif de commande (130) ;
**caractérisé par** le fait
de commander l'au moins un commutateur de raccordement au réseau électrique pour raccorder la puissance de courant alternatif provenant du bus de courant alternatif (116) à l'un(e) d'un réseau électrique de courant alternatif (105) et d'une charge locale (124).

14. Procédé de la revendication 13, comprenant en outre le fait :
de recevoir de la puissance à partir d'une troisième source de puissance (104c) ;
de convertir la puissance provenant de la troisième source de puissance (104c) en une puissance de courant alternatif en utilisant un troisième onduleur (110c) ; et
de fournir la puissance de courant alternatif provenant du troisième onduleur (110c) au bus de courant alternatif (116).

15. Procédé de la revendication 13, comprenant en outre le fait de coupler l'au moins un commutateur de raccordement au réseau électrique à un deuxième commutateur de raccordement au réseau électrique d'un deuxième portail de collecte d'énergie.

16. Système d'énergie comprenant :
un portail de collecte d'énergie modulaire selon la revendication 1 ; et
un sous-système d'alimentation de secours (145), comportant
une source de puissance de courant continu (150) ;
un convertisseur continu/continu bidirectionnel (165), le convertisseur continu/continu bidirectionnel (165) reçoit de la puissance de courant continu à un premier niveau de courant continu à partir de la source de puissance de courant continu (150) et convertit la puissance en une puissance de courant continu à un deuxième niveau de courant continu ; et
un onduleur continu/alternatif bidirectionnel (170), l'onduleur continu/alternatif bidirectionnel reçoit de la puissance de courant continu au deuxième niveau de courant continu à partir du convertisseur continu/continu (165) et inverse la puissance en puissance de courant alternatif, l'onduleur continu/alternatif bidirectionnel (170) étant en outre couplé au réseau électrique de courant alternatif (105).

17. Système d'énergie de la revendication 16, dans lequel la source de puissance de courant continu (150) du sous-système d'alimentation de secours (145) est un bloc-batterie (160), le bloc-batterie (160) étant configuré pour recevoir de la puissance à partir du réseau électrique de courant alternatif (105) via l'onduleur continu/alternatif bidirectionnel (170) et le convertisseur continu/continu bidirectionnel (165).

18. Système d'énergie de la revendication 16, dans lequel la source de puissance de courant continu (150) du sous-système d'alimentation de secours (145) est un générateur de courant continu (155).

19. Système d'énergie de la revendication 16, dans lequel la source de puissance de courant continu (150) du sous-système d'alimentation de secours (145) comporte :
un générateur (155) ; et
un bloc-batterie (160), le bloc-batterie étant capable de recevoir de la puissance de courant continu à partir d'au moins l'un d'un générateur (165) et d'un réseau électrique en courant alternatif (105) via l'onduleur continu/alternatif bidirectionnel (107) et le convertisseur continu/continu bidirectionnel (165).
